# EUROPÄISCHE PATENTANMELDUNG

(11) **EP 4 151 510 A1**
(43) Veröffentlichungstag der Anmeldung: **22.03.2023**
(21) Anmeldenummer: 22189713.5
(22) Anmeldetag: 10.08.2022
(51) Int. Cl.: B62J 43/23, B62J 43/30, B62J 11/00, B62J 43/20, B62J 43/13

(54) **HALTEVORRICHTUNG ZUM HALTEN EINER BATTERIE EINES MIT MUSKELKRAFT UND/ODER ELEKTRISCH ANTREIBBAREN FAHRRADS**

(30) Priorität: 17.09.2021 DE 102021210350
(71) Anmelder: Robert Bosch GmbH, 70442 Stuttgart (DE)
(72) Erfinder: Klaiber, Andreas, 72461 Albstadt (DE); Kunert, Peter, 72805 Lichtenstein (DE); Bayer, Lisa, 70197 Stuttgart (DE); Godbole, Vikram Anil, 70771 Echterdingen (DE)

(57) **Zusammenfassung**

Die vorliegende Erfindung betrifft eine Haltevorrichtung (1) zum Halten einer Batterie (200), insbesondere einer Zusatzbatterie, eines mit Muskelkraft und/oder elektrisch antreibbaren Fahrrads (100). Die Haltevorrichtung (1) umfasst einen Aufnahmebereich (2), einen Befestigungsbereich (3) und ein Fixierelement (4). Der Aufnahmebereich (2) ist eingerichtet, eine Batterie (200) aufzunehmen und erstreckt sich in einer Erstreckungsrichtung (501). Über den Befestigungsbereich (3) ist die Haltevorrichtung (1) an einem Rahmen (101) des Fahrrads (100) befestigbar. Das Fixierelement (4) ist eingerichtet, die Batterie (200) in einer zur Erstreckungsrichtung (501) senkrechten Richtung (502) zu fixieren. Dabei ist der Aufnahmebereich (2) derart ausgebildet, dass die Batterie (200) seitlich in der zur Erstreckungsrichtung (501) senkrechten Richtung (502) auf den Aufnahmebereich (2) aufschiebbar ist.

## Beschreibung

### Stand der Technik

Die vorliegende Erfindung betrifft eine Haltevorrichtung zum Halten einer Batterie, insbesondere einer Zusatzbatterie, eines mit Muskelkraft und/oder elektrisch antreibbaren Fahrrads. Ferner betrifft die Erfindung eine Anordnung aus einer derartigen Haltevorrichtung und einer Batterie sowie ein mit Muskelkraft und/oder elektrisch antreibbares Fahrrad.

Batterien für Elektrofahrräder werden aufgrund der steigenden Kapazitätsanforderung in immer größeren Bauformen ausgeführt. Da der im Rahmen verfügbare Platz, speziell bei "intube"-Batterien aufgrund der Geometrie limitiert ist wird die Kapazitätserweiterung oftmals durch eine Zusatzbatterie, auch "Range Extender" genannt, erreicht. Diese wird in der Regel am Fahrradrahmen mit einer entsprechenden Halterung fixiert und über ein Kabel und eine entsprechende Buchse, in der Regel die Laden-am-Rad-Buchse, mit dem elektrischen Motor kontaktiert. Diese Buchse ist unabhängig vom Halter am Fahrradrahmen platziert. Bei ungünstiger Lage ist der Anschluss eines Kabels während des Fahrbetriebs nicht möglich, da es bewegende Teile, z.B. die Kurbel, blockiert oder den Nutzer in seiner Bewegung einschränkt.

### Offenbarung der Erfindung

Die erfindungsgemäße Haltevorrichtung zum Halten einer Batterie, insbesondere einer Zusatzbatterie, eines mit Muskelkraft und/oder elektrisch antreibbaren Fahrrads weist den Vorteil eines kompakten Aufbaus sowie einer einfachen und sicheren Montierung der Batterie an einem Rahmen des Fahrrads auf. Dies wird dadurch erreicht, dass die Haltevorrichtung derart ausgebildet ist, dass diese ein seitliches Aufschieben der Batterie auf die Haltevorrichtung ermöglicht. Insbesondere umfasst die Haltevorrichtung zum Halten einer Batterie, insbesondere einer Zusatzbatterie, eines mit Muskelkraft und/oder elektrisch antreibbaren Fahrrads einen Aufnahmebereich, einen Befestigungsbereich und ein Fixierelement. Der Aufnahmebereich ist eingerichtet, eine Batterie aufzunehmen, und erstreckt sich in einer Erstreckungsrichtung. Über den Befestigungsbereich ist die Haltevorrichtung an einem Rahmen des Fahrrads befestigbar. Das Fixierelement ist eingerichtet, die Batterie in einer zur Erstreckungsrichtung senkrechten Richtung zu fixieren. Der Aufnahmebereich ist derart ausgebildet, dass die Batterie seitlich in der zur Erstreckungsrichtung senkrechten Richtung auf den Aufnahmebereich aufschiebbar ist. Somit kann die Batterie bei montierter Haltevorrichtung am Rahmen des Fahrrads einfach auf (also nicht in) den Rahmen aufgeschoben werden. Die zur Erstreckungsrichtung senkrechte Richtung kann im Rahmen der vorliegenden Erfindung insbesondere auch als Querrichtung bezeichnet werden. Die Erstreckungsrichtung des Aufnahmebereichs, in die insbesondere auch der Erstreckungsrichtung der Haltevorrichtung, ist in vorteilhafter Weise eine Haupterstreckungsrichtung. In der Haupterstreckungsrichtung erstreckt sich der Aufnahmebereich bzw. die Haltevorrichtung mehr als in der Querrichtung. Die Querrichtung kann im vorliegenden Erfindung insbesondere auch als Nebenerstreckungsrichtung bezeichnet werden. Das Fixierelement kann vorzugsweise Teil des Aufnahmebereichs sein. Das heißt, dass bei einer solchen Ausgestaltung das Fixierelement derart ausgebildet ist, dass dieses auch zum Aufnehmen bzw. zum Tragen der Batterie dient. Die Batterie ist vorzugsweise eine aufladbare Batterie, d.h. ein Akku. Eine aufladbare Zusatzbatterie kann im Rahmen der Erfindung auch als Zusatzakku bezeichnet werden. Es sei angemerkt, dass der Begriff "Zusatzbatterie" impliziert, dass das Fahrrad auch eine Hauptbatterie umfasst, die als die Hauptquelle zum Versorgen eines elektrischen Motors des Fahrrads mit elektrischer Energie vorgesehen ist. Die Zusatzbatterie dient zur Erweiterung einer Kapazitätserweiterung bzw. einer Reichweite des Fahrrads. Das mit Muskelkraft und/oder elektrisch antreibbares Fahrrad ist insbesondere ein Elektrofahrrad.

Die Unteransprüche zeigen bevorzugte Weiterbildungen der Erfindung.

Vorzugsweise umfasst der Aufnahmebereich eine erste Führung zum Führen der Batterie. Die Batterie ist über die erste Führung auf den Aufnahmebereich aufschiebbar.

Besonders bevorzugt kann der Aufnahmebereich ferner eine zweite Führung zum Führen der Batterie umfassen. Dabei ist die Batterie ferner über die zweite Führung auf den Aufnahmebereich aufschiebbar. Das heißt, dass die Batterie über die erste Führung und die zweite Führung auf den Aufnahmebereich aufgeschoben werden kann. Durch die Führungen kann das Verbinden der Batterie mit der Haltevorrichtung erleichtert werden.

Die erste Führung erstreckt sich vorzugsweise in der zur Erstreckungsrichtung senkrechten Richtung. Im Falle einer zweiten Führung kann sich diese vorzugsweise in der zur Erstreckungsrichtung senkrechten Richtung erstrecken.

Vorzugsweise ist die erste Führung an einem ersten Ende des Aufnahmebereichs in der Erstreckungsrichtung angeordnet. Besonders bevorzugt ist ferner die zweite Führung an einem zweiten Ende des Aufnahmebereichs in der Erstreckungsrichtung angeordnet. Die Anordnung der ersten Führung und insbesondere auch der zweiten Führung an entsprechenden Enden des Aufnahmebereichs bewirkt eine stabile Anordnung der Batterie am Aufnahmebereich. Insbesondere kann vermieden werden, dass während einer Fahrt mit dem Fahrrad die Batterie um eine zur Querrichtung parallelen Achse wackelt, da entsprechende Enden der Batterie durch die Führung/Führungen fixiert sind.

Vorzugsweise ist die erste Führung an einem Zentralbereich des Aufnahmebereichs federnd gelagert. Bevorzugt ist die zweite Führung am Zentralbereich des Aufnahmebereichs federnd gelagert. Der Zentralbereich befindet sich in vorteilhafter Weise zwischen einem ersten Ende und einem zweiten Ende des Aufnahmebereichs. Durch die federnde Lagerung der ersten Führung und/oder der zweiten Führung kann das Aufschieben der Batterie auf den Aufnahmebereich erleichtert und eine richtige Positionierung der Batterie sichergestellt werden, da somit Fertigungs- und Positionstoleranzen der Batterie und/oder der Haltevorrichtung kompensiert werden können.

Die erste Führung und/oder die zweite Führung ist/sind vorzugsweise eingerichtet, eine Vorspannungskraft parallel zur Erstreckungsrichtung auszuüben. Somit kann eine sichere Fixierung der Batterie in der Erstreckungsrichtung ermöglicht werden. Die Vorspannungskraft der ersten Führung und/oder der zweiten Führung ist in vorteilhafter Weise nach innen, in Richtung zum Zentralbereich des Aufnahmebereichs, gerichtet. Insbesondere ist/sind die erste Führung und/oder die zweite Führung derart ausgebildet, dass die erste Führung und/oder die zweite Führung in jeder Toleranzlage vorgespannt sind.

Um ein besonders leichtes Einschieben der Batterie in die Führungen zu ermöglichen, weisen die erste Führung und die zweite Führung unterschiedliche Längen auf. Mit anderen Worten ist die eine Führung länger als die andere. Dabei kann die mechanische Fixierung der Batterie an der Haltevorrichtung in vorteilhafter Weise unabhängig von einer elektrischen Kontaktierung zwischen der Batterie und der Haltevorrichtung sein. Es ist aber auch möglich, dass beide Führungen die gleiche Länge aufweisen. Die Länge ist insbesondere das Maß der Führung in der zur Erstreckungsrichtung senkrechten Richtung.

Die erste Führung und/oder die zweite Führung ist/sind vorzugsweise als Gleitführung/Gleitführungen, insbesondere als formschlüssige Gleitführung/Gleitführungen, ausgebildet. Im Rahmen der Erfindung ist eine formschlüssige Gleitführung insbesondere eine Gleitführung, die eine Bewegung der Batterie parallel zur Erstreckungsachse in beiden Richtungen blockiert. Besonders bevorzugt ist/sind die erste Führung und/oder die zweite Führung als Schwalbenschwanzführung/ Schwalbenschwanzführungen, ausgebildet.

Nach einer vorteilhaften Ausgestaltung der Erfindung kann die Haltevorrichtung derart eingerichtet sein, dass die Batterie nur von einer Seite des Aufnahmebereichs auf den Aufnahmebereich aufschiebbar ist. Nach einer alternativen vorteilhaften Ausgestaltung der Erfindung kann die Haltevorrichtung derart eingerichtet sein, dass die Batterie von beiden Seiten des Aufnahmebereichs auf den Aufnahmebereich aufschiebbar ist.

Vorzugsweise ist das Fixierelement als formschlüssiges Verbindungselement, insbesondere als Schnappverbindungselement, ausgebildet. Besonders bevorzugt ist das Schnappverbindungselement ein Schnapphaken. Das Schnappverbindungselement ist in vorteilhafter Weise als federblattartiges Element ausgebildet, welches mit dem Zentralbereich des Aufnahmebereichs verbunden ist.

Vorzugsweise umfasst die Haltevorrichtung ferner eine integrierte elektrische Kontaktvorrichtung, die eingerichtet ist, eine kabellose elektrische Kontaktierung zwischen der Haltevorrichtung und einer elektrischen Kontaktvorrichtung der Batterie herzustellen. Diese elektrische Kontaktvorrichtung der Haltevorrichtung kann im Rahmen der vorliegenden Erfindung auch als erste elektrische Kontaktvorrichtung bezeichnet werden. Die elektrische Kontaktvorrichtung der Haltevorrichtung umfasst vorzugsweise eine Steckereinheit. Die Steckereinheit kann vorzugsweise Steckkontakte aufweisen, die reihenförmig in der Erstreckungsrichtung nacheinander angeordnet sind. Die elektrische Kontaktvorrichtung der Batterie umfasst hierbei vorzugsweise eine Gegensteckereinheit mit Steckkontakten. Dabei können die Steckkontakte der Gegensteckereinheit entsprechend reihenförmig in der Erstreckungsrichtung nacheinander angeordnet sein.

Die elektrische Kontaktvorrichtung der Haltevorrichtung kann nach einer vorteilhaften Ausgestaltung der Erfindung voreilende Kontakte aufweisen, wodurch die Reihenfolge der elektrischen Kontaktierung beeinflusst werden kann.

Nach einer Variante der Erfindung kann die Steckereinheit der Haltevorrichtung vorzugsweise eingerichtet sein, mit der Gegensteckereinheit der Batterie eine Stift-Buchse-Verbindung zu bilden. Nach einer alternativen Variante der Erfindung kann die Steckereinheit der Haltevorrichtung vorzugsweise eingereicht sein, mit der Gegensteckereinheit der Batterie eine Messerkontakt-Verbindung zu bilden. Je nach Anforderung der Dichtheit der Verbindung der Steckereinheiten kann die eine oder die andere Variante für die Ausführung der Steckereinheiten gewählt werden.

Die Haltevorrichtung umfasst vorzugsweise ferner eine elektrische Kontaktvorrichtung, die eingerichtet ist, eine elektrische Kontaktierung zwischen der Haltevorrichtung und einem elektrischen Motor und/oder einer Steuereinheit und/oder einem Display des Fahrrads herzustellen. Diese elektrische Kontaktvorrichtung der Haltevorrichtung kann im Rahmen der vorliegenden Erfindung auch als zweite elektrische Kontaktvorrichtung bezeichnet werden. Die elektrische Kontaktvorrichtung ist ferner bevorzugt eingerichtet, in einem Rahmen des Fahrrads angeordnet zu sein. Somit kann sichergestellt sein, dass keine Komponente der elektrischen Kontaktvorrichtung den Nutzer des Fahrrads in seiner Bewegung einschränkt oder während des Betriebs des Fahrrads in ein anderes Bauteil eingeklemmt wird. Weiterhin bietet diese Anordnung der elektrischen Kontaktvorrichtung den Vorteil einer Flexibilität beim Design der Haltevorrichtung und des Fahrrads. Die elektrische Kontaktvorrichtung kann beispielsweise ein Kabel und einen Stecker aufweisen.

Nach einer vorteilhaften Ausgestaltung der Erfindung umfasst die Haltevorrichtung eine Kabelhalterung. Die Kabelhalterung ist eingerichtet, ein Kabel zu halten. Das Kabel weist bevorzugt an jedem Ende eine Steckereinheit auf. Die Kabelhaltevorrichtung umfasst vorzugsweise mindestens ein Kabelhalteelement, welches insbesondere derart ausgebildet ist, dass das Kabel in das mindestens ein Kabelhalteelement eingeklemmt werden kann. Das mindestens ein Kabelhalteelement kann vorzugsweise am Aufnahmebereich, insbesondere am Zentralbereich des Aufnahmebereichs, angeordnet sein. Insbesondere kann das mindestens ein Kabelhalteelement bevorzugt als ein vom Aufnahmebereich hervorstehender Vorsprung ausgebildet sein.

Bevorzugt kann das Kabel ein Kabel zum Herstellen einer direkten elektrischen Kontaktierung zwischen der Batterie und einem elektrischen Motor und/oder einer Steuereinheit und/oder einem Display des Fahrrads sein. Die eine Steckereinheit des Kabels wird dabei in eine Gegensteckereinheit der Batterie eingesteckt und die andere Steckereinheit in eine Gegensteckereinheit des elektrischen Motors und/oder der Steuereinheit und/oder des Displays des Fahrrads. Somit können die zuvor beschriebenen elektrischen Kontaktvorrichtungen entfallen. Es sei angemerkt, dass die erwähnte direkte elektrische Kontaktierung zwischen der Batterie und einem elektrischen Motor und/oder einer Steuereinheit und/oder einem Display des Fahrrads bedeutet, dass diese nicht über die Haltevorrichtung erfolgt.

Vorzugsweise umfasst der Befestigungsbereich mindestens eine Öffnung, durch die ein Verbindungselement zum Befestigen der Haltevorrichtung am Rahmen des Fahrrads einsetzbar ist. Besonders bevorzugt ist in der Öffnung ein Einsatz (Insert) angeordnet. In vorteilhafter Weise ist der Einsatz aus einem Material ausgebildet, welches eine höhere Festigkeit als ein Material des Aufnahmebereichs aufweist. Somit kann vermieden werden, dass durch eine Vorspannung des Verbindungselements der Aufnahmebereich beschädigt wird. Es ist zu verstehen, dass der Einsatz derart ausgebildet ist, dass durch diesen das Verbindungselement einsetzbar ist. Vorzugsweise ist der Einsatz ein Metalleinsatz. Vorzugsweise ist der Aufnahmebereich, bevorzugt die komplette Haltevorrichtung bis auf den Einsatz, aus Kunststoff hergestellt. Somit kann der Aufnahmebereich einfach und kostengünstig ausgebildet werden und gleichzeitig einer Vorspannung des Verbindungselements widerstehen.

Weiterhin betrifft die Erfindung eine Anordnung, die eine zuvor beschriebene Haltevorrichtung und eine Batterie, insbesondere eine Zusatzbatterie, umfasst.

Bevorzugt sind eine elektrische Kontaktvorrichtung der Batterie und die elektrische Kontaktvorrichtung der Haltevorrichtung derart ausgebildet, dass eine Aufschieberichtung der Batterie auf den Aufnahmebereich der Haltevorrichtung einer Verbindungsrichtung der elektrischen Kontaktvorrichtung der Batterie mit der elektrischen Kontaktvorrichtung der Haltevorrichtung zum Herstellen einer elektrischen Kontaktierung zwischen der Batterie und der Haltevorrichtung entspricht. Das heißt mit anderen Worten, dass die Aufschieberichtung der Batterie auf die Haltevorrichtung gleich mit der Verbindungsrichtung zum Verbinden der elektrischen Kontaktvorrichtungen der Batterie und der Haltevorrichtung miteinander bzw. mit einer elektrischen Kontaktierungsrichtung zwischen der Batterie und der Haltevorrichtung entspricht. Dies hat den Vorteil, dass ein Nutzer keinen zusätzlichen Schritt ausführen muss, um die elektrische Kontaktierung zwischen der Batterie und der Haltevorrichtung und somit auch zwischen der Batterie und den Komponenten des Fahrrads, die mit elektrischer Energie versorgt werden müssen, herzustellen. Insbesondere kann dabei der Schritt des Steckens eines zusätzlichen Kabels entfallen. Das heißt, dass die elektrischen Kontaktvorrichtungen zusammengeführt werden, sobald die Batterie auf den Aufnahmebereich aufgeschoben ist. Wenn die elektrische Kontaktvorrichtung der Haltevorrichtung die oben genannte Steckereinheit und die elektrische Kontaktvorrichtung der Batterie die oben genannte Gegensteckereinheit umfassen, entspricht dabei die erwähnte Verbindungsrichtung einer Steckrichtung. Eine zusätzliche Verriegelung des aus den Steckereinheiten gebildeten Stecksystems ist nicht erforderlich, da diese durch die Fixierung der Batterie auf die Haltevorrichtung gewährleistet ist. Die Haltevorrichtung kann vorzugsweise aus Kunststoff hergestellt sein. Somit kann die federnde Lagerung der ersten Führung und/oder der zweiten Führung auf einfache Weise realisiert werden. Im Falle einer Haltervorrichtung mit einem in der Öffnung des Befestigungsbereichs angeordneten Einsatz kann der Einsatz aus einem unterschiedlichen Material als der Rest der Haltevorrichtung hergestellt sein.

Ein weiterer Aspekt der vorliegenden Erfindung bezieht sich auf ein Fahrrad, welches mit Muskelkraft und/oder elektrisch antreibbar ist. Insbesondere ist das Fahrrad ein Elektrofahrrad. Das Fahrrad umfasst eine zuvor beschriebene Anordnung. Dabei ist die Haltevorrichtung am Rahmen befestigt und die Batterie am Rahmen über die Haltevorrichtung fixiert.

Die Batterie ist in vorteilhafter Weise eine Zusatzbatterie (Range Extender). Das heißt, dass das Fahrrad außer der Zusatzbatterie in vorteilhafter Weise noch eine Hauptbatterie umfasst. Bevorzugt ist die Hauptbatterie analog zur Zusatzbatterie aufladbar und kann somit im Rahmen der Erfindung insbesondere auch als Hauptakku bezeichnet werden. Die Hauptbatterie kann in vorteilhafter Weise im Rahmen, auf dem Rahmen oder am Gepäckträger angeordnet sein.

Die Haltevorrichtung ist in vorteilhafter Weise auf dem Rahmen des Fahrrads befestigt, so dass auch die Batterie auf dem Rahmen fixiert ist.

### Kurze Beschreibung der Zeichnungen

Nachfolgend werden Ausführungsbeispiele der Erfindung unter Bezugnahme auf die begleitende Zeichnung im Detail beschrieben, wobei gleiche bzw. funktional gleiche Bauteile jeweils mit dem gleichen Bezugszeichen bezeichnet sein. In der Zeichnung ist:
- Figur 1: eine schematische perspektivische Ansicht einer Haltevorrichtung gemäß einem ersten Ausführungsbeispiel der vorliegenden Erfindung,
- Figur 2: eine schematische perspektivische Explosionsansicht einer Anordnung, die eine Batterie und die Haltevorrichtung gemäß dem ersten Ausführungsbeispiel der vorliegenden Erfindung umfasst,
- Figur 3: ein mit Muskelkraft und/oder elektrisch antreibbares Fahrrad, welches die Anordnung aus Figur 2 umfasst,
- Figur 4: eine schematische perspektivische Ansicht einer Haltevorrichtung gemäß einem zweiten Ausführungsbeispiel der vorliegenden Erfindung, und
- Figur 5: eine schematische perspektivische Explosionsansicht einer Anordnung, die eine Batterie und die Haltevorrichtung gemäß dem zweiten Ausführungsbeispiel der vorliegenden Erfindung umfasst.

### Ausführungsformen der Erfindung

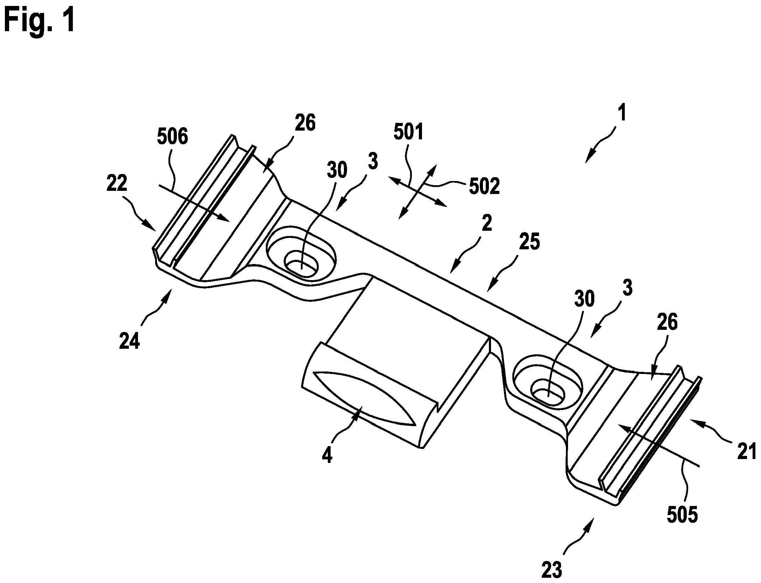

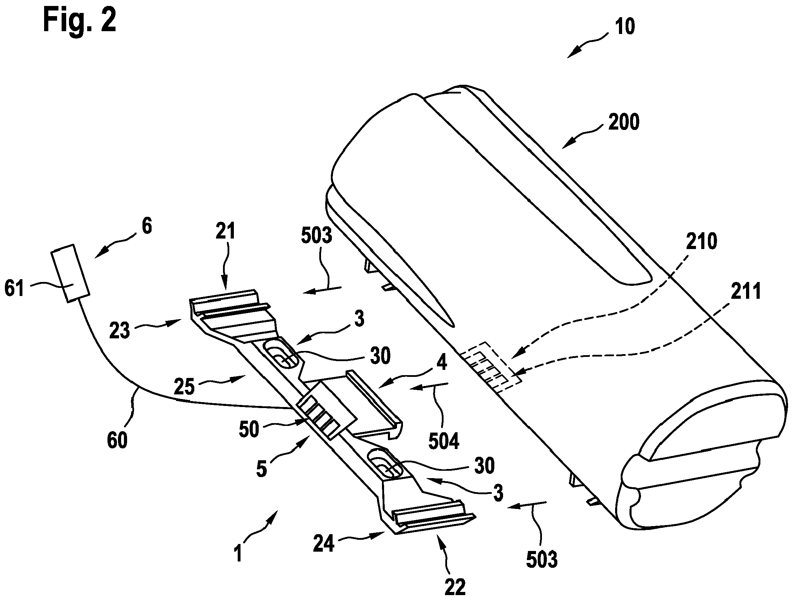

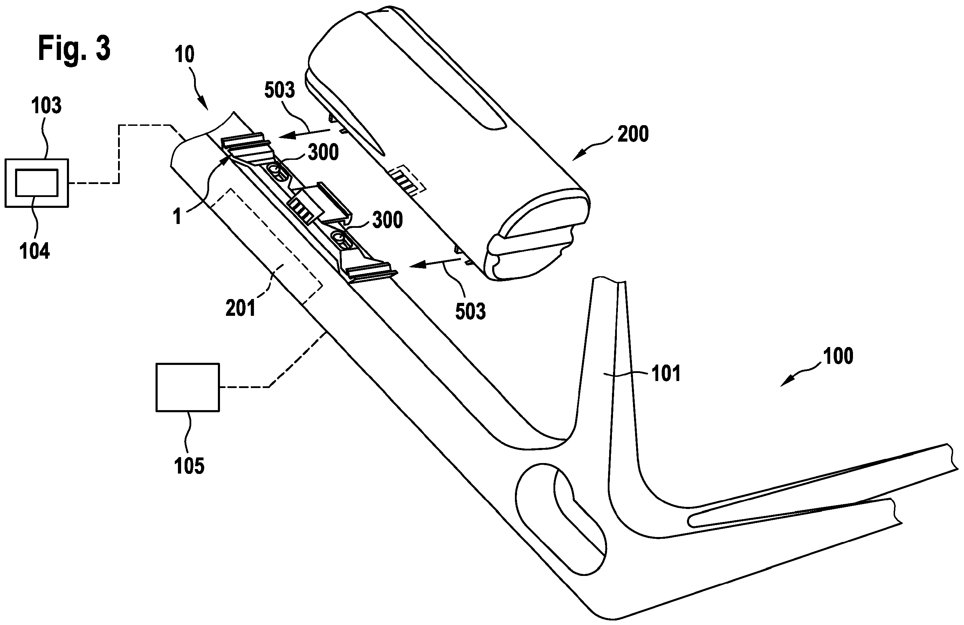

Nachfolgend wird unter Bezugnahme auf die Figuren 1 bis 3 eine Haltevorrichtung 1 zum Halten einer Batterie 200 eines mit Muskelkraft und/oder elektrisch antreibbaren Fahrrads 100 gemäß einem ersten Ausführungsbeispiel der Erfindung im Detail beschrieben. Die Haltevorrichtung 1 bildet zusammen mit der Batterie 200 eine Anordnung 10, die in der Explosionsansicht von Figur 2 zu sehen ist. Das Fahrrad 100 mit der Haltevorrichtung 1 ist in Figur 3 durch einen Rahmen 101 dargestellt.

In Figur 3 ist die Haltevorrichtung 1 am Rahmen 101 befestigt, wobei die Batterie 200 im nicht fixierten Zustand gezeigt ist. Das Fahrrad 100 umfasst eine im Rahmen 101 platzierte Hauptbatterie 201. Allerdings kann die Hauptbatterie 1 auch an einem Gepäckträger oder am/auf dem Rahmen 101 angebracht sein. Die Batterie 200, die über die Haltevorrichtung 1 am Rahmen 101 fixiert werden kann, dient als Zusatzbatterie zum Erweitern einer Kapazität bzw. einer Reichweite des Fahrrads 100. Sowohl die Hauptbatterie 201 als auch die Zusatzbatterie 200 sind aufladbar, so dass diese auch als Hauptakku bzw. Zusatzakku bezeichnet werden können.

Wie aus den Figuren 1 bis 3 ersichtlich ist, umfasst die Haltevorrichtung 1 einen Aufnahmebereich 2, einen Befestigungsbereich 3 und ein Fixierelement 4.

Der Aufnahmebereich 2 ist eingerichtet, die Batterie 200 aufzunehmen, und erstreckt sich in einer Erstreckungsrichtung 501. Die Erstreckungsrichtung 501 ist dabei eine Haupterstreckungsrichtung.

Insbesondere ist der Aufnahmebereich 2 derart ausgebildet, dass die Batterie 200 seitlich in der zur Erstreckungsrichtung 501 senkrechten Richtung 502 den Aufnahmebereich 2 aufschiebbar ist. Die Aufschieberichtung 503 ist in Figur 2 eingezeichnet.

Aus Figur 2 ergibt sich, dass die Haltevorrichtung 1 derart eingerichtet ist, dass die Batterie 200 nur von einer Seite des Aufnahmebereichs 2 auf diesen aufschiebbar ist. Es ist allerdings auch möglich, dass die Haltevorrichtung 1 derart eingerichtet ist, dass die Batterie 200 von beiden Seiten des Aufnahmebereichs 2 auf den Aufnahmebereich 2 aufschiebbar ist.

Um die Batterie 200 auf den Aufnahmebereich 2 aufzuschieben zu können, weist der Aufnahmebereich 2 eine erste Führung 21 und eine zweite Führung 22 zum Führen der Batterie 200 auf.

Die erste Führung 21 ist an einem ersten Ende 23 des Aufnahmebereichs 2 in der Erstreckungsrichtung 501 ausgebildet. Entsprechend ist die zweite Führung 22 an einem zweiten Ende 24 des Aufnahmebereichs 2 in der Erstreckungsrichtung 501 ausgebildet. Zwischen dem ersten Ende 23 und dem zweiten Ende 24 des Aufnahmebereichs 2 befindet sich ein Zentralbereich 25 des Aufnahmebereichs 2.

Um Fertigungstoleranzen und/oder Positionstoleranzen der Haltevorrichtung 1 und/oder der Batterie 200 zu kompensieren, sind beide Führungen 21, 22 federnd am Zentralbereich 25 des Aufnahmebereichs 2 gelagert. Dazu sind in vorteilhafter Weise entsprechende blattfederartige Bereiche 26 vorgesehen, die die Führungen 21, 22 mit dem Zentralbereich 25 verbinden. Insbesondere sind die blattfederartigen Bereiche 26 als Kunststofffeder ausgebildet. Beim Aufschieben der Batterie 200 über die Führungen 21, 22 können die blattfederartigen Bereiche 26 leicht nach unten gebogen werden, so dass bei der Endposition der Batterie 200 auf der Haltevorrichtung 1 diese richtig positioniert werden kann.

Insbesondere sind die erste Führung 21 und die zweite Führung 22 am Zentralbereich 25 derart gelagert, dass diese eine Vorspannungskraft parallel zur Erstreckungsrichtung 501 auf die Batterie 200 ausüben. Insbesondere haben eine durch die erste Führung 21 ausübbare Vorspannungskraft 505 und eine durch die zweite Führung 22 ausübbare Vorspannungskraft 506 entgegengesetzte Richtungen. Somit kann die Batterie 200 in der Erstreckungsrichtung 501 sicher fixiert werden.

Beide Führungen 21, 22 sind als Schwalbenschwanzführungen ausgebildet, die sich in der zur Erstreckungsrichtung 501 senkrechten Richtung 502 erstrecken. Insbesondere weisen die erste Führung 21 und die zweite Führung gleiche Längen in der zur Erstreckungsrichtung 501 senkrechten Richtung 502 auf. Somit ist die Konstruktion der Haltevorrichtung 1 vereinfacht. Es ist allerdings auch möglich, dass die erste Führung 21 und die zweite Führung 22 in der zur Erstreckungsrichtung 501 senkrechten Richtung 502 unterschiedlich lang ausgebildet sind. Dies erleichtert das Einschieben der Haltevorrichtung 1 in die Führungen 21, 22.

Über den Befestigungsbereich 3 ist die Haltevorrichtung 1 am Rahmen 101 des Fahrrads (100) befestigbar. Insbesondere umfasst dazu der Befestigungsbereich 3 zwei längliche Öffnungen 30. Die Anzahl und/oder die Form der Öffnungen 30 kann/können aber variieren. In die Öffnungen 30 können Verbindungselemente 300, beispielsweise Schrauben, eingesetzt werden, so dass die Haltevorrichtung 1 am Rahmen 101 befestigt werden kann. Die Öffnungen 30 sind in vorteilhafter Weise im Zentralbereich 25 des Aufnahmebereichs 2 ausgebildet.

Das Fixierelement 4, welches als formschlüssiges Schnappverbindungselement ausgebildet ist, ist eingerichtet, die Batterie 200 in der zur Erstreckungsrichtung 501 senkrechten Richtung 502 zu fixieren. Insbesondere ist das Fixierelement 4 als Schnapphaken ausgebildet, der aktiv gedrückt werden muss, um die Batterie 200 entnehmen zu können.

Zum Herstellen einer elektrischen Kontaktierung zwischen der Haltevorrichtung 1 und der Batterie 200 umfasst die Haltevorrichtung 1 gemäß Figur 2 eine erste elektrische Kontaktvorrichtung 5, die aus einer Steckereinheit 50 ausgebildet ist. Die erste Kontaktvorrichtung 5 ist in der Haltevorrichtung 1 integriert. Dadurch ist eine kabellose elektrische Kontaktierung zwischen der Haltevorrichtung 1 und der Batterie 200 hergestellt.

Figur 2 ist ferner zu entnehmen, dass die Steckereinheit 50 Steckkontakte aufweist, die reihenförmig in der Erstreckungsrichtung 50 nacheinander angeordnet sind. Eine elektrische Kontaktvorrichtung 210 der Batterie 200 umfasst hierbei eine Gegensteckereinheit 211 mit Steckkontakten. Die Steckkontakte der Gegensteckereinheit 211 sind entsprechend reihenförmig in der Erstreckungsrichtung 50 nacheinander angeordnet. Dabei entspricht eine Aufschieberichtung 503 der Batterie 200 auf den Aufnahmebereich 2 der Haltevorrichtung 1 einer Verbindungsrichtung 504 der ersten elektrischen Kontaktvorrichtung 5 der Haltevorrichtung 1 mit der elektrischen Kontaktvorrichtung 210 der Batterie 200. Die Verbindungsrichtung 504 kann aufgrund der Ausbildung der ersten elektrischen Kontaktvorrichtung 5 der Haltevorrichtung 1 und der entsprechenden elektrischen Kontaktvorrichtung 210 als Steckereinheiten insbesondere als Steckrichtung bezeichnet werden.

Die Steckkontakte der Steckereinheit 50 und die Steckkontakte der Gegensteckereinheit 211 können jeweils einen Messerkontakt bilden. Alternativ können die Steckereinheit 50 und die Gegensteckereinheit 211 eine Stift-Buchse-Verbindung bilden. Eine Stift-Buchse-Verbindung ist bevorzugt, wenn hohe Anforderungen für die Dichtheit der elektrischen Kontaktierung zwischen der Batterie 200 und der Haltevorrichtung 1 vorliegen.

Des Weiteren umfasst die Haltevorrichtung 1 eine zweite elektrische Kontaktvorrichtung 6, die eingerichtet ist, eine elektrische Kontaktierung zwischen der Haltevorrichtung 1 und einem elektrischen Motor 105 und/oder einer Steuereinheit 104 und/oder einem Display 103 des Fahrrads 100 herzustellen. Der elektrische Motor 105, die Steuereinheit 104 und das Display 103 sind in Figur 3 aus Darstellungsgründen nur schematisch durch entsprechende Boxen dargestellt. Vorzugsweise ist das Display 103 Teil der Steuereinheit 104. Die zweite elektrische Kontaktvorrichtung 6 umfasst in vorteilhafter Weise ein Kabel 60 und einen Stecker 61. Das Kabel 60 verbindet die erste elektrische Kontaktvorrichtung 5 bzw. die Steckereinheit 50 mit dem Stecker 61. Sowohl das Kabel 61 als auch der Stecker 61 sind im Rahmen 101 des Fahrrads 101 angeordnet.

Die beschriebene Haltevorrichtung 1 weist den Vorteil eines kompakten Aufbaus sowie einer einfachen und sicheren Montierung der Batterie 200 am Rahmen 101 des Fahrrads 100 auf. Die Fixierung der Batterie 200 auf der Haltevorrichtung 1 erfolgt parallel zur Erstreckungsrichtung 501 mittels der Führungen 21, 22 und parallel zur Erstreckungsrichtung senkrechten Richtung 502 mittels des Fixierelements 4. Ferner kombiniert die Haltevorrichtung 1 eine mechanische federnde Fixierung und elektrische Kontaktierung der Batterie 200 in einem Schritt, was den Aufwand des Nutzers und die Möglichkeit eines Montagefehlers minimiert. Die Haltevorrichtung 1 kann in vorteilhafter Weise komplett aus Kunststoff, insbesondere als ein Teil, hergestellt werden.

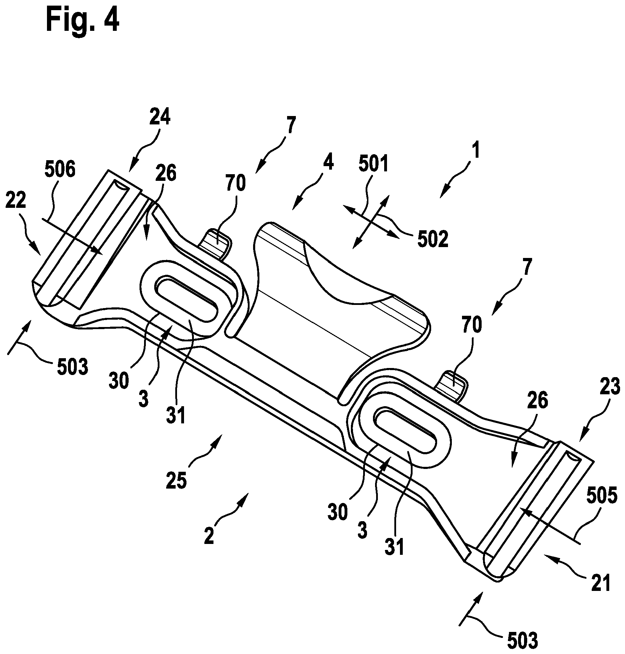

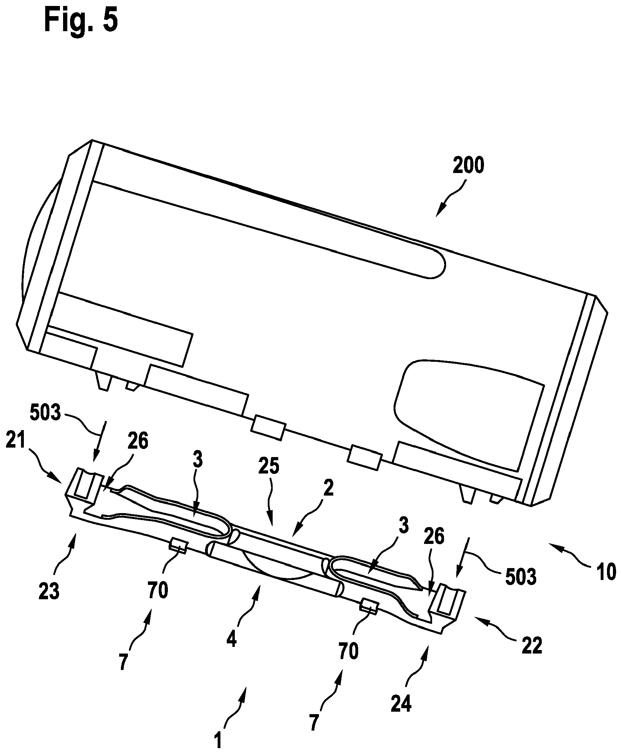

Die Figuren 4 und 5 beziehen sich auf eine Haltevorrichtung 1 gemäß einem zweiten Ausführungsbeispiel und eine Anordnung 10 aus der Haltevorrichtung 1 und einer Batterie 200.

Die Haltevorrichtung 1 bzw. die Anordnung 10 gemäß dem zweiten Ausführungsbeispiel unterscheidet sich von derjenigen gemäß dem ersten Ausführungsbeispiel durch die folgenden Aspekte.

Im Gegensatz zur Haltevorrichtung 1 gemäß dem ersten Ausführungsbeispiel, bei der die Verbindungselemente (z.B. Schrauben) 300 direkt in die Öffnungen 30 einsetzbar sind, ist bei der Haltevorrichtung 1 gemäß dem zweiten Ausführungsbeispiel in jeder Öffnung 30 ein Einsatz 31 angeordnet. In die Einsätze 31 können die Verbindungselemente 300 eingeführt werden, damit die Haltevorrichtung 1 am Rahmen 101 des Fahrrads 100 montiert wird. Die Einsätze 31 sind vorzugsweise aus Metall hergestellt, wobei der Aufnahmebereich 2, insbesondere dessen Zentralbereich 25, aus Kunststoff ausgebildet ist. Aufgrund der höheren Festigkeit der Einsätze 31 als der Zentralbereich 25 kann der Zentralbereich 25 vor einer Beschädigung aufgrund einer Vorspannung der Verbindungselemente 300 geschützt werden.

Ein weiterer Unterschied besteht darin, dass die Haltevorrichtung 1 nicht die zuvor beschriebenen elektrischen Kontaktvorrichtungen 5, 6 aufweist. Im Gegensatz zum ersten Ausführungsbeispiel, bei dem die elektrische Kontaktierung der Batterie 200 mit dem elektrischen Motor 105 und/oder der Steuereinheit 103 und/oder dem Display 104 über die Haltevorrichtung 1 erfolgt, ist hier die Batterie 200 mit dem elektrischen Motor 105 und/oder der Steuereinheit 103 und/oder dem Display 104 direkt elektrisch verbunden. "Direkt" bedeutet, dass die elektrische Verbindung nicht über die Haltevorrichtung 1 stattfindet. Stattdessen kann ein Kabel mit zwei Steckereinheiten benutzt werden, wobei die eine Steckereinheit zum Kontaktieren einer Gegensteckeinheit der Batterie 200 und die andere Steckereinheit mit einer Gegensteckereinheit des elektrischen Motors 105 und/oder der Steuereinheit 103 und/oder des Displays 104 dienen. Die Gegensteckeinheit des elektrischen Motors 105 und/oder der Steuereinheit 103 und/oder des Displays 104 kann in vorteilhafter Weise an einem Lenker des Fahrrads 100 angeordnet sein.

Zum Halten des Kabels umfasst die Haltevorrichtung 1 eine Kabelhalterung 7. Die Kabelhalterung 7 weist zwei Kabelhalteelemente 70 auf, die jeweils in vorteilhafter Weise zum besseren Halten des Kabels in der Erstreckungsrichtung 501 auf einer Seite des Fixierelements 4 angeordnet sind. Die Kabelhalteelemente 70 sind am Aufnahmebereich 2, insbesondere am Zentralbereich 25, angeordnet. Insbesondere sind die Kabelhalteelemente 70 als vom Aufnahmebereich 2 in der zur Erstreckungsrichtung 501 senkrechten Richtung 502 hervorstehende Vorsprünge ausgebildet. In die Kabelhalteelemente 70 kann das erwähnte Kabel eingeklemmt werden.

Ferner kann/können die Kabelhaltevorrichtung 7 bzw. die Halteelemente 70 bevorzugt mit Bezug auf das Fixierelement 4 derart angeordnet sein, dass eine Bewegung des Kabels auch durch das Fixierelement 4 blockiert ist.

Da die Haltevorrichtung 1 gemäß dem zweiten Ausführungsbeispiel keine integrierte elektrische Kontaktvorrichtung aufweist, kann diese einfach hergestellt werden. Weiterhin kann mittels der Kabelhalterung 7 vermieden werden, dass das Kabel den Nutzer des Fahrrads in seiner Bewegung einschränkt oder während des Betriebs des Fahrrads in ein anderes bewegendes Bauteil eingeklemmt wird.

Zum Montieren der Batterie 200 auf der Haltevorrichtung 1 wird die Batterie 200 analog zum ersten Ausführungsbeispiel in der Aufschieberichtung 503 auf die Haltevorrichtung 1 aufgeschoben. Ferner wird aufgrund des Designs der Haltevorrichtung 1 eine federnde Fixierung der Batterie 200 erzielt.

## Patentansprüche

1. Haltevorrichtung (1) zum Halten einer Batterie (200), insbesondere einer Zusatzbatterie, eines mit Muskelkraft und/oder elektrisch antreibbaren Fahrrads (100), umfassend:
• einen Aufnahmebereich (2), der eingerichtet ist, eine Batterie (200) aufzunehmen, und der sich in einer Erstreckungsrichtung (501) erstreckt,
• einen Befestigungsbereich (3), über den die Haltevorrichtung (1) an einem Rahmen (101) des Fahrrads (100) befestigbar ist, und
• ein Fixierelement (4), welches eingerichtet ist, die Batterie (200) in einer zur Erstreckungsrichtung (501) senkrechten Richtung (502) zu fixieren,
wobei der Aufnahmebereich (2) derart ausgebildet ist, dass die Batterie (200) seitlich in der zur Erstreckungsrichtung (501) senkrechten Richtung (502) auf den Aufnahmebereich (2) aufschiebbar ist.

2. Haltevorrichtung (1) nach Anspruch 1, wobei der Aufnahmebereich (2) eine erste Führung (21) zum Führen der Batterie (200) umfasst, wobei die Batterie (200) über die erste Führung (21) auf den Aufnahmebereich (2) aufschiebbar ist, und wobei der Aufnahmebereich (2) vorzugsweise ferner eine zweite Führung (22) zum Führen der Batterie (200) umfasst, wobei die Batterie (200) ferner über die zweite Führung (22) auf den Aufnahmebereich (2) aufschiebbar ist.

3. Haltevorrichtung (1) nach Anspruch 2, wobei die erste Führung (21) an einem ersten Ende (23) des Aufnahmebereichs (2) in der Erstreckungsrichtung (501) angeordnet ist, wobei vorzugsweise die zweite Führung (22) an einem zweiten Ende (24) des Aufnahmebereichs (2) in der Erstreckungsrichtung (501) angeordnet ist.

4. Haltevorrichtung (1) nach Anspruch 2 oder 3, wobei die erste Führung (21) und/oder die zweite Führung (22) federnd an einem Zentralbereich (25) des Aufnahmebereichs (2) gelagert ist/sind.

5. Haltevorrichtung (1) nach einem der Ansprüche 2 bis 4, wobei die erste Führung (21) und/oder die zweite Führung (22) eingerichtet ist/sind, eine Vorspannungskraft parallel zur Erstreckungsrichtung (501) auszuüben.

6. Haltevorrichtung (1) nach einem der Ansprüche 2 bis 5, wobei die erste Führung (21) und die zweite Führung (22) unterschiedliche Längen aufweisen.

7. Haltevorrichtung (1) nach einem der Ansprüche 2 bis 6, wobei die erste Führung (21) und/oder die zweite Führung (22) als Gleitführung/Gleitführungen, vorzugsweise als formschlüssige Gleitführung/Gleitführungen, insbesondere als Schwalbenschwanzführung/Schwalbenschwanzführungen, ausgebildet ist/sind.

8. Haltevorrichtung (1) nach einem der vorherigen Ansprüche, wobei die Haltevorrichtung (1) derart eingerichtet ist, dass die Batterie (200) nur von einer Seite oder von beiden Seiten des Aufnahmebereichs (2) auf den Aufnahmebereich (2) aufschiebbar ist.

9. Haltevorrichtung (1) nach einem der vorherigen Ansprüche, wobei das Fixierelement (4) als formschlüssiges Verbindungselement, vorzugsweise als Schnappverbindungselement, insbesondere als Schnapphaken, ausgebildet ist.

10. Haltevorrichtung (1) nach einem der vorherigen Ansprüche, ferner umfassend eine integrierte elektrische Kontaktvorrichtung (5), die eingerichtet ist, eine kabellose elektrische Kontaktierung zwischen der Haltevorrichtung (1) und einer elektrischen Kontaktvorrichtung (210) der Batterie (200) herzustellen.

11. Haltevorrichtung (1) nach einem der vorherigen Ansprüche, ferner umfassend eine elektrische Kontaktvorrichtung (6), die eingerichtet ist, eine elektrische Kontaktierung zwischen der Haltevorrichtung (1) und einem elektrischen Motor (105) und/oder einer Steuereinheit (103) und/oder einem Display (104) des Fahrrads (100) herzustellen und in einem Rahmen (101) des Fahrrads (100) angeordnet zu sein.

12. Haltevorrichtung (1) nach einem der Ansprüche 1 bis 9, ferner umfassend eine Kabelhalterung (7), die eingerichtet ist, ein Kabel, insbesondere zum Herstellen einer direkten elektrischen Kontaktierung zwischen der Batterie (200) und einem elektrischen Motor (105) und/oder einer Steuereinheit (103) und/oder einem Display (104) des Fahrrads (100), zu halten.

13. Haltevorrichtung (1) nach einem der vorherigen Ansprüche, wobei der Befestigungsbereich (3) mindestens eine Öffnung (30) umfasst, durch die ein Verbindungselement (300) zum Befestigen der Haltevorrichtung (1) am Rahmen (101) des Fahrrads (100) einsetzbar ist, wobei vorzugsweise in der Öffnung (30) ein Einsatz (31) angeordnet ist, welcher aus einem Material ausgebildet ist, welches eine höhere Festigkeit als ein Material des Aufnahmebereichs (2) aufweist.

14. Anordnung (10), umfassend eine Haltevorrichtung (1) nach einem der vorherigen Ansprüche und eine Batterie (200), vorzugsweise wobei eine elektrische Kontaktvorrichtung (210) der Batterie (200) und eine elektrische Kontaktvorrichtung (5) der Haltevorrichtung (1) derart ausgebildet sind, dass eine Aufschieberichtung (503) der Batterie (200) auf den Aufnahmebereich (2) der Haltevorrichtung (1) einer Verbindungsrichtung (504) der elektrischen Kontaktvorrichtung (210) der Batterie (200) mit der elektrischen Kontaktvorrichtung (5) der Haltevorrichtung (1) zum Herstellen einer elektrischen Kontaktierung zwischen der Batterie (200) und der Haltevorrichtung (1) entspricht.

15. Mit Muskelkraft und/oder elektrisch antreibbares Fahrrad (100), umfassend:
• einen Rahmen (101),
• eine Anordnung (10) nach Anspruch 14, wobei die Haltevorrichtung (1) am Rahmen (101) befestigt ist und die Batterie (200) am Rahmen (101) über die Haltevorrichtung (1) fixiert ist,
• wobei vorzugsweise das Fahrrad eine Hauptbatterie (201) und die Batterie (200) eine Zusatzbatterie ist.
